# EUROPEAN PATENT SPECIFICATION

(11) **EP 2 492 186 B1**
(45) Date of publication and mention of the grant of the patent: **24.07.2013**
(21) Application number: 12155604.7
(22) Date of filing: 15.02.2012
(51) Int. Cl.: B63H 20/14, B63H 20/20, F16H 55/08

(54) **Power transmission device of outboard motor**
Leistungsübertragungsvorrichtung für Außenbordmotor
Dispositif de transmission de puissance de moteur hors-bord

(30) Priority: 24.02.2011 JP 2011038904
(43) Date of publication of application: 29.08.2012
(73) Proprietor: Suzuki Motor Corporation, Shizuoka-ken 432-8611 (JP)
(72) Inventor: Eidome, Yuki, Shizuoka-Ken, 432-8611 (JP)
(74) Representative: Klunker . Schmitt-Nilson . Hirsch

(56) References cited:
- US-A- 2 616 387
- US-A- 3 256 852
- US-A- 5 791 950
- US-A1- 2008 017 451
- US-A1- 2008 236 320

## Description

### BACKGROUND OF THE INVENTION

### Field of the Invention

The present invention relates to a power transmission device of an outboard motor according to the preamble of claim 1, i.e., a power transmission device, which is provided with a bevel gear mechanism for transmitting driving force generated by a prime mover (e.g., an engine or an electric motor) from a drive shaft of the prime mover to a propeller shaft.

### Description of the Related Art

In an outboard motor, it is necessary to transmit a driving force generated by a prime mover (an engine or an electric motor) from a drive shaft which is coupled to an output shaft (a crankshaft in a case of an engine) of the prime mover and extends downward to a propeller shaft which has a rear end attached to a propeller and extends horizontally. Thus, a bevel gear mechanism is interposed between the drive shaft and the propeller shaft.

The bevel gear mechanism is housed in a gear case which is to sink under the water together with the propeller. The gear case receives resistance of water during sailing, which causes power loss. In order to reduce such water resistance, it is required to make small the gear case to provide a smaller frontal projected area.

Accordingly, a Gleason type bevel gear with teeth having a spiral tooth shape is adopted in a bevel gear mechanism of a conventional outboard motor, as disclosed in Japanese Patent Laid-Open Publication No. 2008-25603, patent family member of patent document US 2008/017451 A. The diameter of the gear is reduced, thereby addressing the need for a reduction in gear case size.

However, a bevel gear with teeth having a Gleason type spiral tooth shape has lower efficiency of power transmission than a bevel gear with teeth having a straight tooth shape, due to power loss resulting from friction between the teeth of that bevel gear and teeth of another bevel gear which are engaged with each other. The lower efficiency of power transmission may cause a degradation in engine performance and fuel efficiency, which is a major problem particularly for low-power outboard motors.

In addition, fabrication of a bevel gear with teeth having a Gleason type spiral tooth shape requires specialized facilities, which increases the cost of manufacturing bevel gears.

In accordance with the preamble of claim 1, US 5 791 950 A, which is considered as being the closest prior art, discloses a power transmission device of an outboard motor, in which the drive bevel gear and the driven bevel gear are constructed as straight bevel gears. A similar transmission device is known from US 2 616 387 A.

### SUMMARY OF THE INVENTION

It is an object of the present invention, which has been made in consideration of the above-described circumstances, to provide a power transmission device of an outboard motor capable of achieving reduction in cost of manufacturing bevel gears and improving mechanical efficiency of power transmission of the outboard motor.

The above and other objects can be achieved by the present invention by providing a power transmission device of an outboard motor having the features of claim 1.

According to the present invention of the structure mentioned above, since the drive bevel gear and driven bevel gear are constructed as straight bevel gears, cost of manufacturing the bevel gears can be reduced to be lower than a case in which Gleason type spiral bevel gears are used. The use of straight bevel gears also reduces power loss resulting from friction, which allows an improvement in mechanical efficiency of power transmission.

The advantages of the crowning portion defined by claim 1 are set forth in the body of the specification.

The nature and further characteristic features of the present invention will be made clearer from the following descriptions made with reference to the accompanying drawings.

### BRIEF DESCRIPTION OF THE DRAWINGS

In the accompanying drawings:
Fig. 1 is a left side view showing an outboard motor which is driven by an engine incorporated therein and is provided with a power transmission device according to a first embodiment of the present invention;
Fig. 2 is a sectional view, in an enlarged scale, showing a bevel gear mechanism of the power transmission device with a gear case in Fig. 1 partially cut away;
Fig. 3 is an illustrated sectional view showing a drive bevel gear in Fig. 2;
Fig. 4 is a sectional view showing a forward driven bevel gear or a reverse driven bevel gear in Fig. 2;
Fig. 5 is an illustrated sectional view of a tooth taken along a generating line of a reference pitch cone of the forward driven bevel gear in Fig. 4;
Fig. 6 is a vertical sectional view showing an outboard motor which is driven by an engine incorporated therein and is provided a power transmission device of an outboard motor according to a second embodiment of the present invention;
Fig. 7 is a sectional view showing a power transmission device with a gear case in Fig. 6 partially cut away;
Fig. 8 is an illustrated sectional view showing a drive bevel gear in Fig. 7;
Fig. 9 is an illustrated sectional view showing a driven bevel gear in Fig. 7; and
Fig. 10 is an illustrated sectional view of a tooth taken along a generating line of a reference pitch cone of the driven bevel gear in Fig. 9.

### DESCRIPTION OF THE PREFERRED EMBODIMENTS

Hereunder preferred embodiments for carrying out the present invention will be described with reference to the accompanying drawings. Further, it is to be noted that the present invention is not limited to the embodiments, and also noted that terms "upper", "lower", "right", "left" and the like terms showing direction are used herein with reference to the illustration of the drawings or an actually mounted state of the outboard motor to a boat or like.

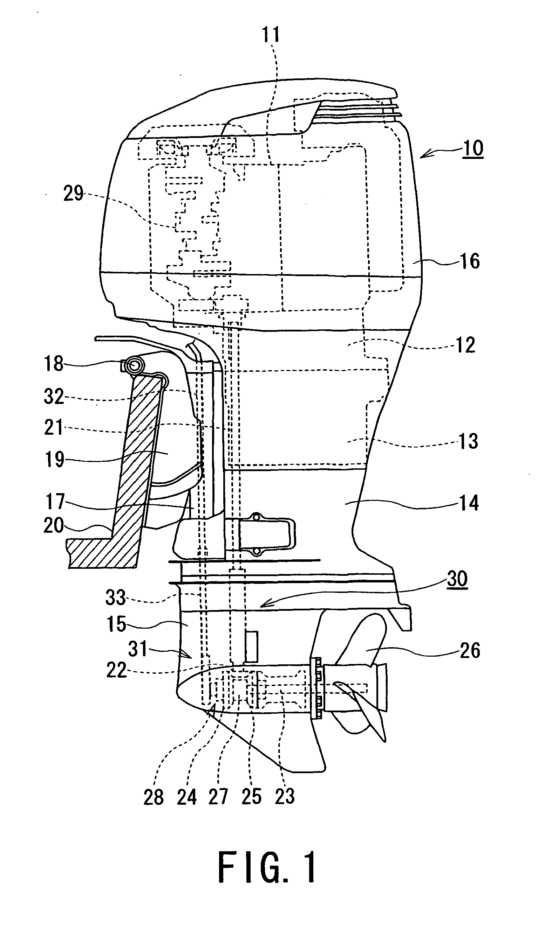

### [First Embodiment (Figs. 1 to 5)]

Fig. 1 is a left side view showing an outboard motor which uses a power transmission device according to a first embodiment of the present invention.

An outboard motor 10 shown in Fig. 1 includes an engine holder 12. An engine 11 as a prime mover is mounted on the engine holder 12. An oil pan block 13, a drive shaft housing 14 and a gear case 15, which are arranged one on top of another in this order, are mounted to a bottom of the engine holder 12. An engine cover 16 covers the engine 11, the engine holder 12 and the oil pan block 13.

A pilot shaft, not shown, is pivotally supported by a swivel bracket 17, by which the outboard motor 10 is supported to be pivotal horizontally. The swivel bracket 17 is supported by a clamp bracket 19 via a swivel shaft 18 so as to be pivotal vertically. The clamp bracket 19 is fixed to a stern portion 20 of a hull. The outboard motor 10 is attached to the hull to be pivotal horizontally and vertically with respect to the hull.

The outboard motor 10 is equipped with a power transmission 30 including a drive shaft 21 which is driven by the engine 11 and a propeller shaft 23 which is driven by the drive shaft 21 via a bevel gear mechanism 28 (a drive bevel gear 22, a forward driven bevel gear 24, and a reverse driven bevel gear 25, which will be described later).

In other words, as shown in Fig. 1, the engine 11 is vertically oriented so that a crankshaft 29 extends vertically.

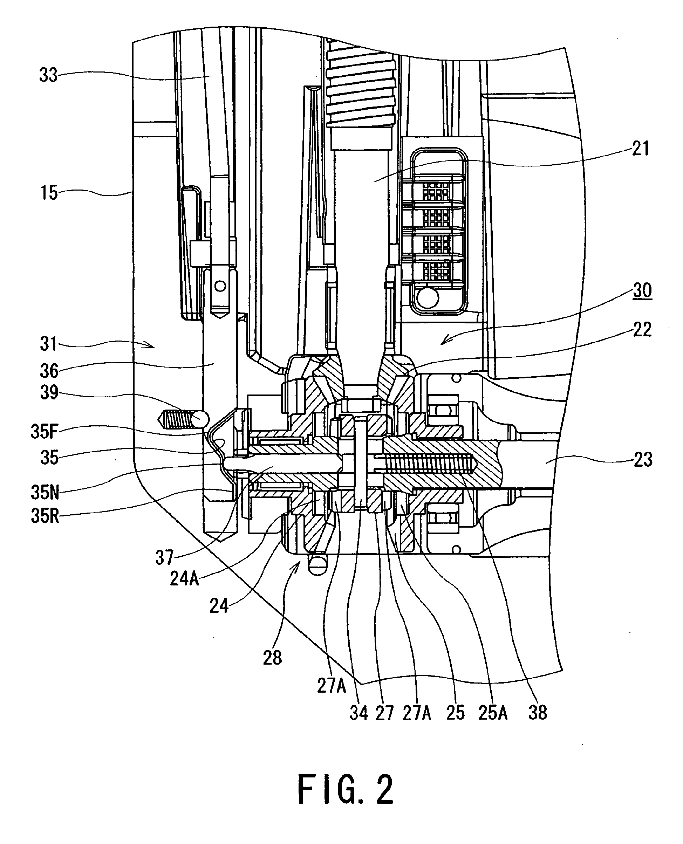

The drive shaft 21 extends vertically inside the engine holder 12, an oil pan block 13, a drive shaft housing 14, and a gear case 15 so as to transmit torque of the crankshaft 29 in the engine 11 to the drive shaft 21. As shown in Fig. 2, the drive bevel gear 22 is securely mounted to a lower end of the drive shaft 21. The drive bevel gear 22 always engages with the forward driven bevel gear 24 and the reverse driven bevel gear 25, which is fitted loosely on the propeller shaft 23 horizontally arranged inside the gear case 15 so as to be rotatable in mutually facing location.

A propeller 26 is fixed to one end of the propeller shaft 23, and a dog clutch 27 is fitted to the propeller shaft 23 so as to be rotatable together with the propeller shaft 23 and be slidable in an axial direction of the propeller shaft 23. That is, the dog clutch 27 is splined to the propeller shaft 23 so as to be movable in the axial direction of the propeller shaft 23 and is provided so as to be rotated together with the propeller shaft 23 via a dog pin 34. The dog clutch 27 includes dogs 27A at two ends in an axial direction.

The dog clutch 27 functions as a clutch mechanism and acts to selectively disconnect the forward driven bevel gear 24 and reverse driven bevel gear 25 from the propeller shaft 23. That is, the dogs 27A of the dog clutch 27 engage with either the dog 24A of the forward driven bevel gear 24 or the dog 25A of the reverse driven bevel gear 25. The torque of the engine 11 transmitted to the forward driven bevel gear 24 and reverse driven bevel gear 25 via the drive shaft 21 and the drive bevel gear 22 is transmitted to the propeller shaft 23 via the dog clutch 27, and the propeller 26 is rotated in the forward direction or reverse direction. In accordance with the forward or reverse rotation of the propeller 26, the hull obtains forward or reverse propulsive thrust.

The outboard motor 10 is provided with a shift mechanism.

The shift mechanism serves to switch the dog clutch 27 to a forward position (where the corresponding dog 27A of the dog clutch 27 engages with the dog 24A of the forward driven bevel gear 24) to place the propeller shaft 23 (the propeller 26) in a forward rotation state, to switch the dog clutch 27 to a reverse position (where the corresponding dog 27A of the dog clutch 27 engages with the dog 25A of the reverse driven bevel gear 25) to place the propeller shaft 23 in a reverse rotation state, or to switch the dog clutch 27 to a neutral position (where the dogs 27A of the dog clutch 27 do not engage with the dog 24A of the forward driven bevel gear 24 and the dog 25A of the reverse driven bevel gear 25) to place the propeller shaft 23 in a neutral state.

The shift mechanism includes a dog clutch actuator 31.

The dog clutch actuator 31 is intended to actuate, i.e., linearly move, the dog clutch 27. The dog clutch actuator 31 includes a pull-rod 33, a shift cam 36, a push rod 37, and a clutch spring 38.

The pull-rod 33 is provided inside the gear case 15 so as to be movable vertically. As shown in Fig. 1, the pull-rod 33 is directly coupled to a clutch rod 32 near a joint between the drive shaft housing 14 and the gear case 15. The clutch rod 32 is inserted in the pilot shaft, not shown, pivotally supported by the swivel bracket 17 and is operated to move up or down by a shift operation lever, not shown, placed in the hull.

As shown in Fig. 2, the shift cam 36 is coupled to a lower end of the pull-rod 33 and has a cam surface 35, which will be described hereinlater. The push rod 37 is provided inside the propeller shaft 23 so as to be movable in the axial direction of the propeller shaft 23 and is disposed between the cam surface 35 of the shift cam 36 and the dog pin 34 of the dog clutch 27. The clutch spring 38 is disposed inside the propeller shaft 23 so as to apply an urging force to the push rod 37 via the dog pin 34 to thereby bring the push rod 37 into contact with the cam surface 35 of the shift cam 36.

A forward position 35F, a neutral position 35N, and a reverse position 35R are provided sequentially from top to bottom at the cam surface 35 of the shift cam 36. The shift cam 36 is positioned at each of the positions by a detent mechanism 39. The forward position 35F, neutral position 35N, and reverse position 35R of the cam surface 35 are for positioning the dog clutch 27 at the respective shift positions, i.e., the forward position, neutral position, and reverse position.

The operated shift operation lever, not shown, vertically moves the pull-rod 33 via the clutch rod 32, which causes the push rod 37 to move in an axial direction while following the cam surface 35 of the shift cam 36. When the push rod 37 comes into contact with the cam surface 35 of the shift cam 36 at the forward position 35F, the corresponding dog 27A of the dog clutch 27 engages with the dog 24A of the forward driven bevel gear 24 due to action of the clutch spring 38, and the dog clutch 27 is switched to the forward position. Accordingly, driving force of the drive shaft 21 is transmitted to the propeller shaft 23 via the drive bevel gear 22, forward driven bevel gear 24, and dog clutch 27. The propeller 26 is then rotated in the forward direction and the hull is moved forward.

When the push rod 37 comes into contact with the cam surface 35 of the shift cam 36 at the reverse position 35R, the corresponding dog 27A of the dog clutch 27 engages with the dog 25A of the reverse driven bevel gear 25 due to action of the push rod 37, and the dog clutch 27 is switched to the reverse position. Accordingly, the driving force of the drive shaft 21 is transmitted to the propeller shaft 23 via the drive bevel gear 22, reverse driven bevel gear 25, and dog clutch 27. The propeller 26 is then rotated in the reverse direction and the hull is moved backward.

When the push rod 37 comes into contact with the cam surface 35 of the shift cam 36 at the neutral position 35N, the dogs 27A of the dog clutch 27 disengage from the dog 24A of the forward driven bevel gear 24 and the dog 25A of the reverse driven bevel gear 25 due to the action of the push rod 37 or clutch spring 38, and the dog clutch 27 is switched to the neutral position. Accordingly, the driving force of the drive shaft 21 is not transmitted to the propeller shaft 23 and propeller 26, and the propeller 26 stops the hull from being propelled.

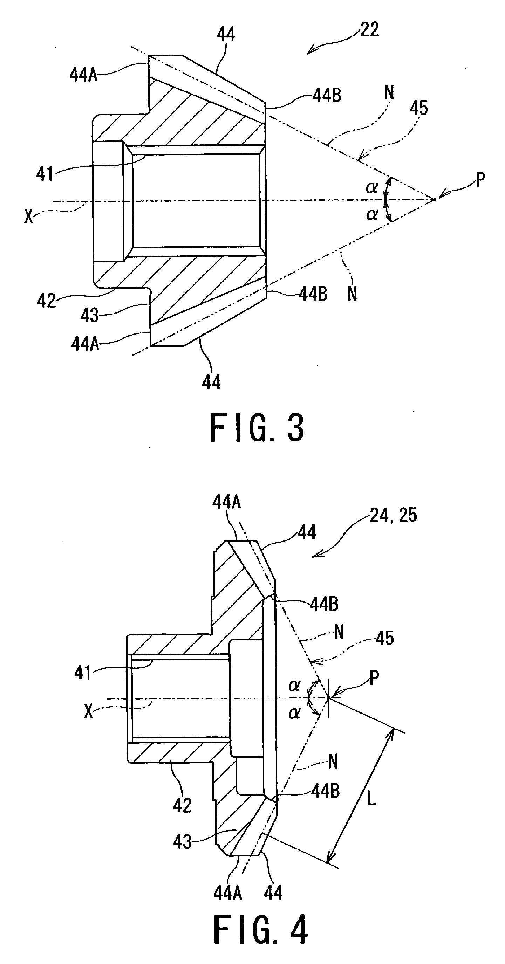

As shown in Fig. 4, the forward driven bevel gear 24 and reverse driven bevel gear 25 include, respectively, a shaft bearing portion 42 having a shaft hole 41 in which the propeller shaft 23 is inserted and a beveled portion 43 which is formed integrally with the shaft bearing portion 42. A plurality of teeth 44 are circumferentially formed at predetermined intervals at the beveled portion 43. The plurality of teeth 44 are formed to have a straight tooth shape. A generating line N of a reference pitch cone 45 is inclined at an angle of α relative to an axis X of the driven bevel gear 24 or 25. The drive bevel gear 22 which engages with the forward driven bevel gear 24 and reverse driven bevel gear 25 has substantially the same configuration as the driven bevel gears 24 and 25 except for a crowning portion 46, which will be described hereinlater, as shown in Fig. 3.

In the forward driven bevel gear 24 and reverse driven bevel gear 25, the angle of α is set to be larger than that of the drive bevel gear 22. The forward driven bevel gear 24 and reverse driven bevel gear 25 are easy to forge and are manufactured in a precision forging process. The drive bevel gear 22 is manufactured in a gear cutting process or in a precision forging process like the forward driven bevel gear 24 and reverse driven bevel gear 25.

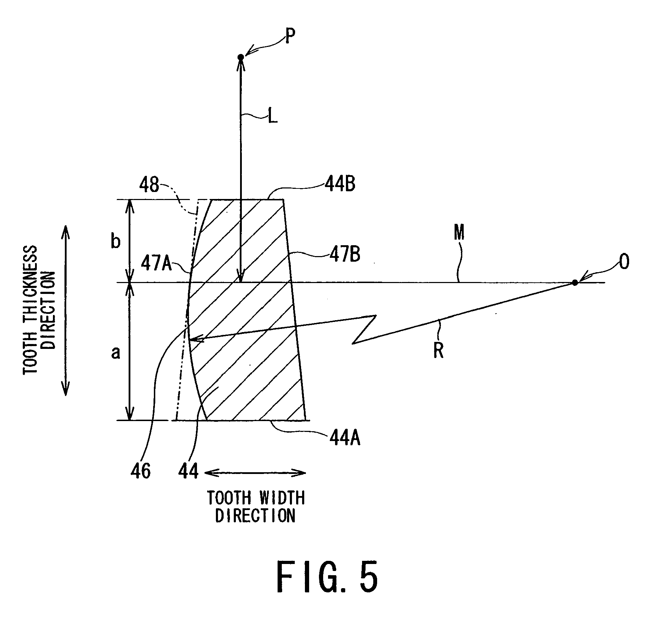

The forward driven bevel gear 24 and reverse driven bevel gear 25 are formed to be different in shapes in a tooth width direction of sides (one side 47A and the other side 47B as shown in Fig. 5) of each tooth 44, i.e., specifications of a crowning portion 46 expanding outwardly in a tooth thickness direction at a middle in the tooth width direction of a side of the tooth 44 (either one of the forward driven bevel gear 24 and reverse driven bevel gear 25 may not include the crowning portion 46). In the present embodiment, the crowning portion 46 is formed, for example, only in each tooth 44 of the forward driven bevel gear 24. Additionally, the crowning portion 46 is formed only at the one side 47A of the tooth 44 and is not formed at the other side 47B. The reason why the crowning portion 46 is formed only at the one side 47A of the tooth 44 resides in that only the one side 47A is to come into contact with the teeth 44 of the drive bevel gear 22.

Reference numeral 48 in Fig. 5 denotes a basic tooth shape for the teeth 44. The other side 47B of each tooth 44 of the forward driven bevel gear 24, the one side 47A and the other side 47B of each tooth 44 of the reverse driven bevel gear 25, and the one side 47A and the other side 47B of each tooth 44 of the drive bevel gear 22 are formed to have the basic tooth shape 48.

The crowning portion 46 formed at the one side 47A of each tooth 44 of the forward driven bevel gear 24 has a shape of a single arc of a circle with a radius R. A center of the arc (a crowning center O) is set to be closer to a small diameter end 44B of the forward driven bevel gear 24. That is, supposing that a letter "a" is a distance of a straight line M which extends through the crowning center O and is parallel to the tooth thickness direction from a large diameter end 44A of the tooth 44 and a letter "b" is a distance from the small diameter end 44B, the distances "a" and "b" are set to satisfy a > b. A distance L (Figs. 4 and 5) is a distance between the straight line M and a gear center P (i.e., an apex of the reference pitch cone) of the forward driven bevel gear 24, and a position at the distance L is set as a "crowning center position" relative to the gear center P of the forward driven bevel gear 24.

According to the structure or configuration described above, the first embodiment of the present invention will achieve the following advantageous effects (1) to (6).
(1) Since the drive bevel gear 22, the forward driven bevel gear 24, and the reverse driven bevel gear 25 are formed as straight bevel gears, the cost for manufacturing the bevel gears can be reduced to be lower than a case of using Gleason type spiral bevel gears. The use of the straight bevel gears also reduces power loss resulting from the friction between the teeth 44 of the drive bevel gear 22 and the teeth 44 of the driven bevel gears 24 and 25, resulting in the improvement in mechanical efficiency of power transmission.
(2) Since the forward driven bevel gear 24 according to the first embodiment includes the crowning portion 46 at the one side 47A of each tooth 44, the following advantageous effects can be achieved.

That is, when the driving force is transmitted from the drive bevel gear 22 to the forward driven bevel gear 24 and reverse driven bevel gear 25, the driving reaction force (reaction force of the driving force) from the forward driven bevel gear 24 and the reverse driven bevel gear 25 acts on the drive bevel gear 22 as components of force in a thrust direction along the axis X of the drive bevel gear 22 as well as components of force in the radial direction.

Furthermore, since straight bevel gear has a larger component of force in a radial direction than a Gleason type bevel gear, the components of force in the radial direction cause the drive bevel gear 22 to be separated from the forward driven bevel gear 24 and reverse driven bevel gear 25 in the radial direction and be positionally shifted.

At this time, the teeth 44 of the drive bevel gear 22 and the teeth 44 of the forward driven bevel gear 24 or reverse driven bevel gear 25 have a smaller area of contact on the small diameter end 44B side to reduce a total area of contact between the teeth 44. For this reason, contact pressure on the large diameter end 44A side, in particular, increases, and hence, reduce the durability of the drive bevel gear 22, the forward driven bevel gear 24, and the reverse driven bevel gear 25.

In view of the above matter, in the present embodiment, the crowning portion 46 is formed at the one side 47A of each tooth 44 of the forward driven bevel gear 24. This allows an increase in the area of contact between the teeth 44 of the drive bevel gear 22 and the teeth 44 of the forward driven bevel gear 24. The contact pressure between the teeth 44 of the drive bevel gear 22 and the teeth 44 of the forward driven bevel gear 24 can be hence reduced. As a result, the durability of the drive bevel gear 22 and the forward driven bevel gear 24 can be increased.

Moreover, it is not necessary to increase the rigidity of the gear case 15 that accommodates the drive bevel gear 22, the forward driven bevel gear 24, and the reverse driven bevel gear 25 in order to prevent the drive bevel gear 22 from being shifted in position thereof, and accordingly, it is not necessary to make large the gear case 15 in size.
(3) In the crowning portion 46 formed at the one side 47A of each tooth 44 of the forward driven bevel gear 24, the crowning center O is set to be closer to the small diameter end 44B of the tooth 44, so that with this setting, the one side 47A of each tooth 44 of the forward driven bevel gear 24 is greatly crowned on the large diameter end 44A side, and an area of contact on the large diameter end 44A side at the one side 47A can be increased. As a result, the contact pressure on the large diameter end 44A side at the one side 47A of the tooth 44 can be reduced, and the durability of the forward driven bevel gear 24 can be increased.
(4) In the first embodiment, the crowning portion 46 is formed at a side (the one side 47A) of each tooth 44 in a driven bevel gear (in particular, the forward driven bevel gear 24). In addition, since the angle of α formed by the generating line N of the reference pitch cone 45 with respect to the axis X in the forward driven bevel gear 24 is set to be larger than that of the drive bevel gear 22. Therefore, the forward driven bevel gear 24 can be easy to forge, and in addition, a tooth shape can be easily adjusted at the time of precisely forging the forward driven bevel gear 24. Thus, the crowning portion 46 is easy to form at a side of each tooth 44 of the forward driven bevel gear 24, and the accuracy of shaping a tooth including the crowning portion 46 can be improved.
(5) In the first embodiment, the forward driven bevel gear 24 and the reverse driven bevel gear 25 are formed to be different in the shapes of in the tooth width direction at the sides of each tooth 44. That is, the crowning portion 46 is formed at a side (the one side 47A) of each tooth 44 of the forward driven bevel gear 24 while sides of each tooth 44 of the reverse driven bevel gear 25 are formed to have the basic tooth shape 48 without the crowning portion 46. For this reason, the first embodiment can achieve the following advantageous effects.

That is, transmission torque (i.e., maximum torque) of driving force is much higher at a time when the outboard motor 10 moves forward than that at a time when the outboard motor 10 moves backward. That is, there causes an inequality in area of contact between the teeth 44 of the forward driven bevel gear 24 or the reverse driven bevel gear 25 and the teeth 44 of the drive bevel gear 22 (the inequality means a smaller area of contact on the small diameter end 44B side at the sides of each tooth 44) by a positional shift of the drive bevel gear 22 from the forward driven bevel gear 24 or reverse driven bevel gear 25 resulting from driving reaction force (reaction force of driving force). Accordingly, the inequality increases with an increase in the transmission torque of driving force. In addition, the formation of the crowning portion 46 makes the thickness of each tooth 44 smaller than that of the tooth 44 having the basic tooth shape 48.

Then, in the teeth 44 of the driven bevel gears, each tooth 44 of the reverse driven bevel gear 25 that receives lower transmission torque is formed to have sides having the basic tooth shape 48 and is smaller in a reduction in thickness than each tooth 44 of the forward driven bevel gear 24 that receives higher transmission torque. Therefore, a reduction in overall tooth strength of the driven bevel gears 24 and 25 can be prevented.
(6) Since only the one side 47A of each tooth 44 of the forward driven bevel gear 24 comes into contact with the teeth 44 of the drive bevel gear 22, the crowning portion 46 is formed only at the one side 47A. Formation of the crowning portion 46 reduces the thickness of the tooth 44. Accordingly, in the forward driven bevel gear 24, the crowning portion 46 is provided only at the one side 47A of each tooth 44, and the other side 47B is formed to have the basic tooth shape 48, thus allowing the tooth 44 to have a favorable thickness and to prevent the reduction in strength of the forward driven bevel gear 24.

Furthermore, by providing the crowning portion 46 only at the one side 47A of each tooth 44 of the forward driven bevel gear 24, reduction in the number of man-hours for machining the teeth 44 of the forward driven bevel gear 24 can be achieved by half, and reduction in the cost of manufacturing the forward driven bevel gear 24 can be also achieved.

It is further to be noted that the first embodiment has described an example in which the crowning portion 46 is formed at the one side 47A of each tooth 44 of the forward driven bevel gear 24. However, in an alternation, the crowning portion 46 having specifications equal to or different from those of the crowning portions 46 of the forward driven bevel gear 24 may also be provided at the one side 47A of each tooth 44 of the reverse driven bevel gear 25 that is to come into contact with the teeth 44 of the drive bevel gear 22.

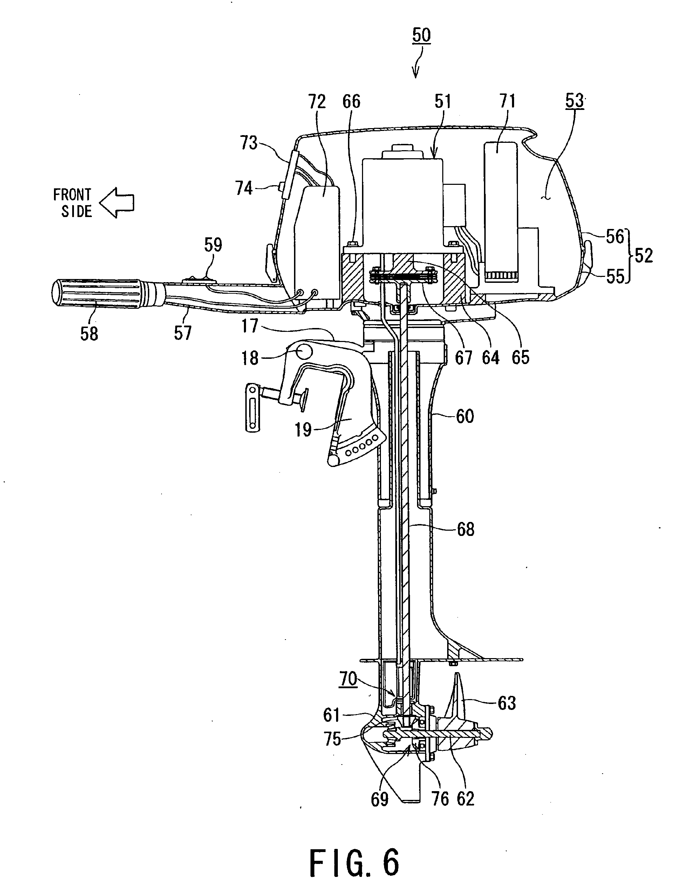

### [Second Embodiment (Figs. 6 to 10)]

Fig. 6 is a vertical sectional view showing an electric motor driven outboard motor which is provided with a power transmission device according to a second embodiment of the present invention. In the second embodiment, the same components as those in the first embodiment are denoted by the same reference numerals, and a description thereof will be simplified or omitted herein.

An outboard motor 50 shown in Fig. 6 includes a box-like motor cover 52 at a top portion, and a reversible electric motor 51 as a prime mover is housed in a motor room 53 inside the motor cover 52. The motor cover 52 may be formed to be vertically separable. The motor cover 52 is composed of, e.g., a lower motor cover section 55 which is fixed to the outboard motor 50 and an upper motor cover section 56 which is removable and covers the lower motor cover section 55 from the upper side.

A steering wheel (handle) 57 extends from a lower front portion (at a left in Fig. 6) of the lower motor cover 55 toward a front (a left side in Fig. 6). A throttle grip 58 for adjusting power of the electric motor 51 is provided at a distal end of the steering wheel 57. A shift switch 59 for switching the electric motor 51 between forward rotation and reverse rotation is mounted on the steering wheel 57.

An extension case 60 is provided at a bottom of the lower motor cover 55 so as to extend downward therefrom. A gear case 61 is provided at a bottom of the extension case 60. A propeller shaft 62 is pivotally supported inside the gear case 61, and a propeller 63 is provided at a rear end of the propeller shaft 62.

Inside the motor room 53, the electric motor 51 is provided on a motor mount 64 which is integrated with or integrally formed at a top of the extension case 60 to be vertically directed with an output shaft 65 extending substantially vertically. The electric motor 51 is fixed with, e.g., bolts 66.

The outboard motor 50 has a power transmission device 70 including a drive shaft 68 which is driven by the electric motor 51 and the propeller shaft 62 that is driven by the drive shaft 68 via a bevel gear mechanism 69.

That is, the drive shaft 68 coupled to a lower end of the output shaft 65 of the electric motor 51 via a coupling 67 extends downward inside the extension case 60. A lower end of the drive shaft 68 is coupled to the propeller shaft 62 via the bevel gear mechanism 69. An output from the electric motor 51, i.e., rotating motion (forward rotation or reverse rotation) of the output shaft 65 is transmitted to the propeller shaft 62 via the drive shaft 68 and bevel gear mechanism 69 so as to rotate the propeller 63 (in the forward direction or reverse direction). A hull, to which the outboard motor 50 is mounted, moves forward when the propeller 63 rotates in the forward direction and moves backward when the propeller 63 rotates in the reverse direction.

Inside the motor room 53, a battery 71, for example, a rechargeable battery, which supplies power to the electric motor 51 and a control unit 72 which controls the number of revolutions and the like of the electric motor 51 are arranged as well as the electric motor 51. A display panel 73 which indicates the amount of charge remaining in the battery 71 is provided on a front of the upper motor cover 56, and a main power switch 74 is placed on the display panel 73.

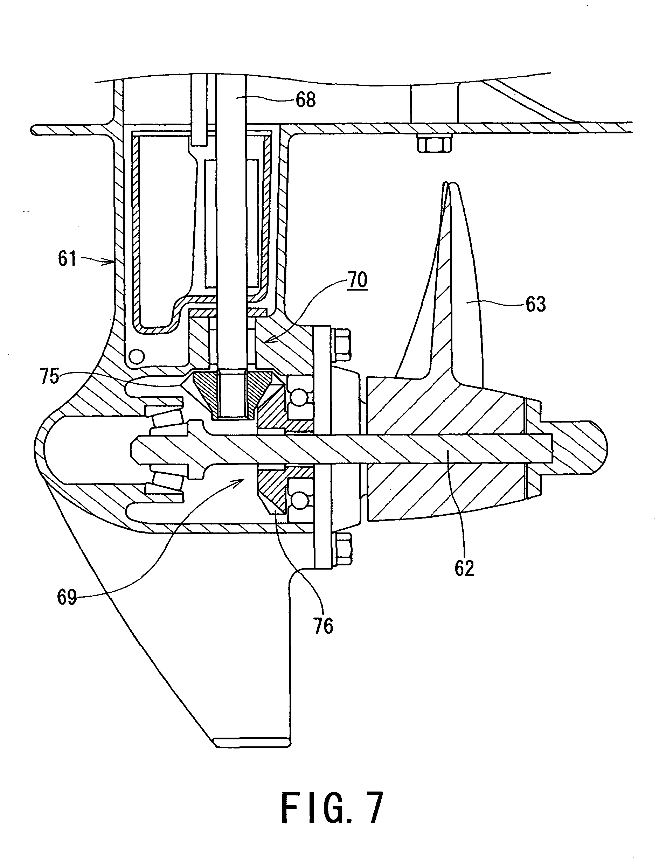

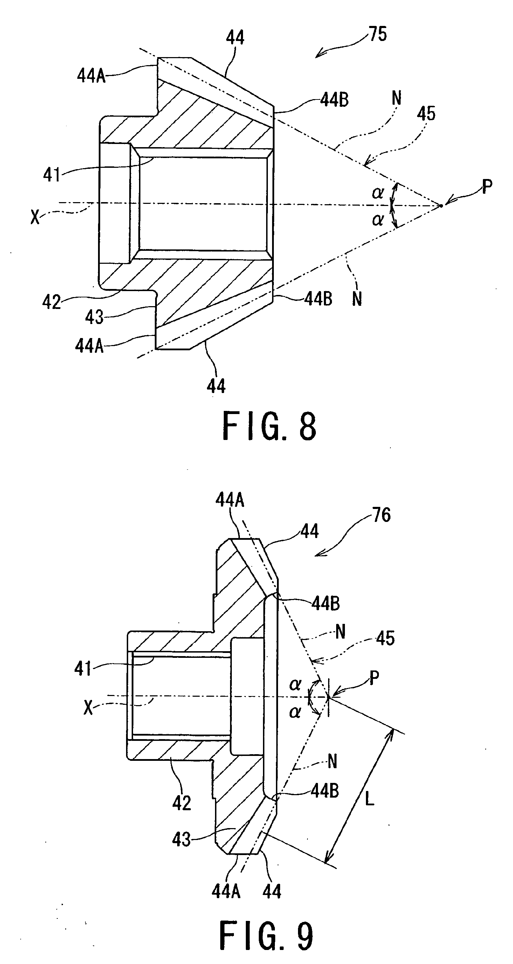

As shown in Fig. 7, the bevel gear mechanism 69 includes a drive bevel gear 75 which is securely mounted to the lower end of the drive shaft 68 and a driven bevel gear 76 which is securely mounted to the propeller shaft 62, the drive bevel gear 75 and the driven bevel gear 76 being always engaged with each other. Like the first embodiment, the drive bevel gear 75 and the driven bevel gear 76 are straight bevel gears with teeth 44 having a straight tooth shape. As shown in Fig. 9, the driven bevel gear 76 having a large angle α which a generating line N of a reference pitch cone 45 forms with an axis X is manufactured in a precision forging process. The drive bevel gear 75 shown in Fig. 8 is manufactured in a gear cutting process or in a precision forging process like the driven bevel gear 76. As shown in Fig. 8, the drive bevel gear 75 has substantially the same configuration as that of the driven bevel gear 76 except for the crowning portion 46, which will be mentioned hereinafter.

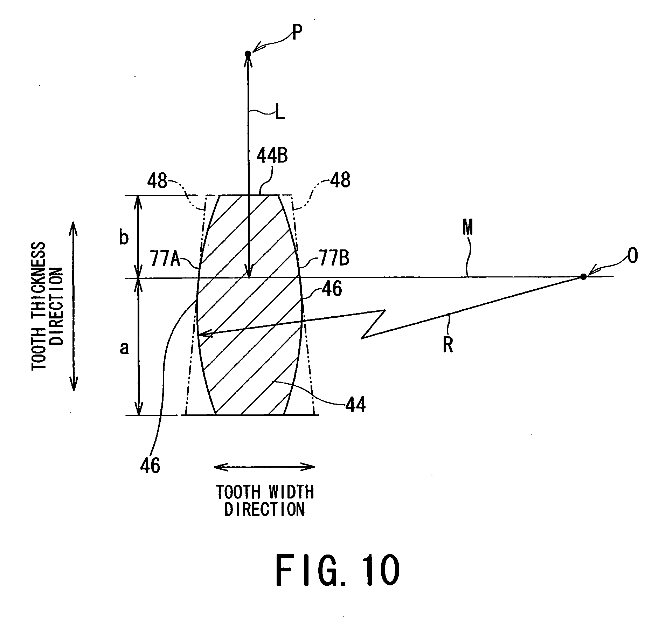

As shown in Fig. 10, crowning portions 46 having different specifications are formed at one side 77A (a forward side) and the other side 77B (a reverse side), respectively, in each of teeth 44 of the driven bevel gear 76 manufactured in the precision forging process. More specifically, the one side 77A in each tooth 44 of the driven bevel gear 76 comes into contact with the forward side of each tooth 44 of the drive bevel gear 75 when the electric motor 51 rotates in the forward direction, and the other side 77B comes into contact with the reverse side of each tooth 44 of the drive bevel gear 75 when the electric motor 51 rotates in the reverse direction. For this reason, in each tooth 44 of the driven bevel gear 76, the crowning portion 46 is formed at the other side 77B so as to have specifications smaller in a reduction in tooth thickness than those of the crowning portion 46 formed at the one side 77A. This is because the driving force with lower transmission torque acts on the other side 77B at the time of the backward movement while the driving force with higher transmission torque acts on the one side 77A at the time of the forward movement.

With the above-described configuration, the second embodiment achieves the following advantageous effects (7) to (11).
(7) Since the drive bevel gear 75 and the driven bevel gear 76 are formed as the straight bevel gears, the cost of manufacturing the bevel gears can be made lower than a case using Gleason type spiral bevel gears. The use of the straight bevel gears also reduces power loss resulting from the friction between the teeth 44 of the drive bevel gear 75 and the teeth 44 of the driven bevel gear 76, thus improving the mechanical efficiency of the power transmission.
(8) According to the second embodiment, since the driven bevel gear 76 includes the crowning portions 46 at the one side 77A and the other side 77B of each tooth 44, the following advantages will be achieved.

That is, when the driving force is transmitted from the drive bevel gear 75 to the driven bevel gear 76, the driving reaction force (reaction force of the driving force) from the driven bevel gear 76 acts on the drive bevel gear 75 as a component of force in a thrust direction along the axis X of the drive bevel gear 75 as well as a component of force in a radial direction. In general, since a straight bevel gear has a larger component of force in a radial direction than a Gleason type bevel gear, the component of force in the radial direction causes the drive bevel gear 75 to be separated from the driven bevel gear 76 in the radial direction and be shifted in position thereof.

At this time, the teeth 44 of the drive bevel gear 75 and the teeth 44 of the driven bevel gear 76 have a smaller area of contact on a small diameter end 44B side to reduce a total area of contact between the teeth 44. For this reason, the contact pressure on a large diameter end 44A side particularly increases, which may cause a reduction in durability of the drive bevel gear 75 and driven bevel gear 76.

With this point, in the second embodiment, the respective crowning portions 46 are formed at the one side 77A and the other side 77B of each tooth 44 of the driven bevel gear 76, and accordingly, the area of contact between the teeth 44 of the drive bevel gear 75 and the teeth 44 of the driven bevel gear 76 can be increased, and the contact pressure between the teeth 44 of the drive bevel gear 75 and the teeth 44 of the driven bevel gear 76 can be reduced. As a result, the durability of the drive bevel gear 75 and the driven bevel gear 76 can be increased.

Accordingly, it is not necessary to increase the rigidity of the gear case 61 that accommodates the drive bevel gear 75 and driven bevel gear 76 in order to prevent the drive bevel gear 75 from being shifted in position thereof, and hence, it is also not necessary to enlarge the gear case 61 in size.
(9) In the crowning portions 46 formed at the one side 77A and the other side 77B of each tooth 44 of the driven bevel gear 76, since the crowning center O is set to be closer to the small diameter end 44B of the tooth 44, in an actual setting, the one side 77A and the other side 77B of each tooth 44 of the driven bevel gear 76 are greatly crowned on the large diameter end 44A side, and hence, an area of contact on the large diameter end 44A side at each of the one side 77A and the other side 77B can be increased. As a result, the contact pressure on the large diameter end 44A side at each of the one side 77A and the other side 77B of the tooth 44 can be reduced, and the durability of the driven bevel gear 76 can be hence increased.
(10) In the second embodiment, the crowning portions 46 are formed at sides (the one side 77A and the other side 77B) of each tooth 44 in the driven bevel gear 76. The angle of α which the generating line N of the reference cone 45 forms with the axis X in the driven bevel gear 76 is set to be larger than that of the drive bevel gear 75. Accordingly, the driven bevel gear 76 is easy to forge. In addition, a tooth shape can be easily adjusted at the time of precisely forging the driven bevel gear 76. The crowning portions 46 are easy to form at the one side 77A and the other side 77B of each tooth 44 of the driven bevel gear 76, and the accuracy of shaping a tooth including the crowning portions 46 can be improved.
(11) In the second embodiment, in each tooth 44 of the driven bevel gear 76, the crowning portions 46 having different specifications are formed at the one side 77A and the other side 77B, respectively, and accordingly, the following advantageous effect will be achieved.

That is, the transmission torque (maximum torque) of the driving force is much higher at the time when the outboard motor 50 moves forward than at the time when the outboard motor 50 moves backward. Inequality in area of contact between the teeth of the driven bevel gear 76 and the teeth of the drive bevel gear 75 (the inequality means a smaller area of contact on the small diameter end 44B side at each of the one side 77A and the other side 77B of each tooth 44) is caused by a radial positional shift of the drive bevel gear 75 from the driven bevel gear 76 resulting from driving reaction force (reaction force of driving force). Accordingly, the inequality increases with an increase in the transmission torque of driving force. Moreover, the formation of the crowning portions 46 makes the thickness of each tooth 44 smaller than that of the tooth 44 having a basic tooth shape 48.

In each tooth 44 of the driven bevel gear 76, the crowning portion 46 is formed at the other side 77B (the reverse side) that receives lower transmission torque so as to have specifications smaller in a reduction in tooth thickness than those of the crowning portion 46 at the one side 77A that receives higher transmission torque. Therefore, a reduction in tooth strength of the driven bevel gear 76 can be prevented.

It is to be noted that although the second embodiment is not limited to the above example in which the respective crowning portions 46 are formed at the one side 77A and the other side 77B of each tooth 44 of the driven bevel gear 76, the crowning portion 46 may be formed only at the one side 77A of each tooth 44 of the driven bevel gear 76, and the other side 77B may be formed to have the basic tooth shape 48. The transmission torque of the driving force is lower at the time of the backward movement than at the time of the forward movement, and inequality in area of contact, which means a smaller area of contact on the small diameter end 44B side, is unlikely to occur between the other side 77B of each tooth 44 of the driven bevel gear 76 and the teeth 44 of the drive bevel gear 75. This is because even if such inequality occurs, since the backward movement is less frequently used, the durability of the driven bevel gear 76 does not decrease significantly.

In the second embodiment, the crowning portions 46 are provided in the driven bevel gear 76. In addition, the respective crowning portions 46 having different specifications may be formed at the forward side and the reverse side of each tooth 44 of the drive bevel gear 75 or the crowning portion 46 may be formed only at the forward side of each tooth 44 of the drive bevel gear 75.

## Claims

1. A power transmission device of an outboard motor (10, 50) having a prime mover (11, 51) as an engine, comprising:
a drive shaft (21, 68) which is driven by the prime mover (11, 51);
a propeller shaft (23, 62) which is driven by the drive shaft (21, 68); and
a bevel gear mechanism (28, 69), through which motion of the drive shaft (21, 68) is transmitted to the propeller shaft (23, 62),
wherein the bevel gear mechanism (28, 69) includes a drive bevel gear (22, 75) which is mounted to the drive shaft (21, 68) and a driven bevel gear (24, 76) which is mounted to the propeller shaft (23, 62) and engages with the drive bevel gear (22, 75), and the drive bevel gear (22, 75) and the driven bevel gear (24, 76) are constructed as straight bevel gears,
**characterized in that**
at least one side of each of teeth in each of the drive bevel gear (22, 75) and the driven bevel gear (24, 76) includes a crowning portion (46) expanding outwardly in a tooth thickness direction at an intermediate portion in a tooth width direction.

2. The power transmission device of an outboard motor according to claim 1, wherein the crowning portion (46) is formed in a shape of a single arc of a circle, and a center (6) of the arc is set to be closer to one end (44B) of the bevel gear (24) having a diameter smaller than that of another one end thereof.

3. The power transmission device of an outboard motor according to claim 1, wherein the crowning portion (46) is formed only at the driven bevel gear (24, 76).

4. The power transmission device of an outboard motor according to claim 3, wherein the driven bevel gear (24, 76) includes crowning portions (46) different in specifications at one side of the tooth from another side thereof.

5. The power transmission device of an outboard motor according to claim 3, wherein the crowning portion (46) is formed only at one side of each tooth of the driven bevel gear (24, 76).

## Patentansprüche

1. Kraftübertragungsvorrichtung eines Außenbordmotors (10, 50), der als Maschine eine Kraftmaschine (11, 51) aufweist, umfassend:
eine Antriebswelle (21, 68), die von der Kraftmaschine (11, 51) angetrieben wird;
eine Schraubenwelle (23, 62), die von der Antriebswelle (21, 68) angetrieben wird; und
einen Kegelradmechanismus (28, 69), über den Bewegung der Antriebswelle (21, 68) auf die Schraubenwelle (23, 62) übertragen wird,
wobei der Kegelradmechanismus (28, 69) ein Antriebskegelrad (22, 75), das auf der Antriebswelle (21, 68) sitzt und ein angetriebenes Kegelrad (24, 76), das auf der Schraubenwelle (23, 62) sitzt und mit dem Antriebskegelrad (22, 75) zusammenwirkt, aufweist, wobei das Antriebskegelrad (22, 75) und das angetriebene Kegelrad (24, 76) als geradverzahnte Kegelräder ausgebildet sind,
**dadurch gekennzeichnet, dass** mindestens eine Seite jedes der Zähne in jedem von dem Antriebskegelrad (22, 75) und dem angetriebenen Kegelrad (24, 76) einen Balligkeitsabschnitt (46) enthält, der sich in Zahndickenrichtung in einem Zwischenbereich in Zahnbreitenrichtung nach außen erstreckt.

2. Kraftübertragungsvorrichtung eines Außenbordmotors nach Anspruch 1, bei der der Balligkeitsabschnitt (46) in Form eines einzelnen Kreisbogens ausgebildet ist und ein Zentrum (6) des Bogens näher an einem Ende (44B) desjenigen Kegelrads (24) eingestellt ist, dessen Durchmesser kleiner ist als der an dessen anderem Ende.

3. Kraftübertragungsvorrichtung eines Außenbordmotors nach Anspruch 1, bei der der Balligkeitsabschnitt (46) nur an dem angetriebenen Kegelrad (24, 76) ausgebildet ist.

4. Kraftübertragungsvorrichtung eines Außenbordmotors nach Anspruch 3, bei der das angetriebene Kegelrad (24, 76) Balligkeitsabschnitte (46) enthält, die auf einer Seite des Zahns andere Spezifikationen aufweisen als auf dessen anderer Seite.

5. Kraftübertragungsvorrichtung eines Außenbordmotors nach Anspruch 3, bei der der Balligkeitsabschnitt (46) nur an einer Seite jedes Zahns des angetriebenen Kegelrads (24, 76) ausgebildet ist.

## Revendications

1. Dispositif de transmission de puissance d'un propulseur hors-bord (10, 50) ayant comme moteur un appareil moteur primaire (11, 51), comprenant :
un arbre moteur (21, 68) qui est entraîné par l'appareil moteur primaire (11, 51) ;
un arbre d'hélice (23, 62) qui est entraîné par l'arbre moteur (21, 68) ; et
un mécanisme à engrenages coniques (28, 69), par l'intermédiaire duquel le mouvement de l'arbre moteur (21, 68) se transmet à l'arbre d'hélice (23, 62),
dans lequel le mécanisme à engrenages coniques (28, 69) inclut un engrenage conique menant (22, 75) qui est monté sur l'arbre moteur (21, 68) et un engrenage conique mené (24, 76) qui est monté sur l'arbre d'hélice (23, 62) et qui engrène avec l'engrenage conique menant (22, 75), et dans lequel l'engrenage conique menant (22, 75) et l'engrenage conique mené (24, 76) sont fabriqués sous forme d'engrenages coniques à denture droite,
**caractérisé en ce qu'**au moins un côté de chacune des dents dans chacun de l'engrenage conique menant (22, 75) et de l'engrenage conique mené (24, 76) inclut une partie bombée (46) s'étendant vers l'extérieur dans la direction de l'épaisseur de dent au niveau d'une partie intermédiaire dans la direction de la largeur de dent.

2. Dispositif de transmission de puissance d'un propulseur hors-bord selon la revendication 1, dans lequel la partie bombée (46) est conformée à la forme d'un unique arc de cercle, et dans lequel le centre (6) de l'arc est placé de façon à être plus près d'une extrémité (44B) de l'engrenage conique (24) ayant un diamètre plus petit que celui de son autre extrémité.

3. Dispositif de transmission de puissance d'un propulseur hors-bord selon la revendication 1, dans lequel la partie bombée (46) est formée seulement au niveau de l'engrenage conique mené (24, 76).

4. Dispositif de transmission de puissance d'un propulseur hors-bord selon la revendication 3, dans lequel l'engrenage conique mené (24, 76) inclut des parties bombées (46) de spécifications différentes d'un côté de la dent par rapport à l'autre côté de celle-ci.

5. Dispositif de transmission de puissance d'un propulseur hors-bord selon la revendication 3, dans lequel la partie bombée (46) est formée seulement d'un côté de chaque dent de l'engrenage conique mené (24, 76).
